# FASCICULE DE BREVET EUROPEEN

(11) **EP 1 150 534 B1**
(45) Date de publication et mention de la délivrance du brevet: **16.06.2010**
(21) Numéro de dépôt: 01401056.5
(22) Date de dépôt: 25.04.2001
(51) Int. Cl.: H04W 48/16

(54) **Procédé de communication entre deux terminaux radio multimodes et terminal correspondant**
Übertragungsverfahren zwischen zwei Funkendgeräten mit Vielfachmodus und entsprechendes Funkendgerät
Method of communication between two multimode radio terminals and corresponding radio terminal

(30) Priorité: 26.04.2000 FR 0005288
(43) Date de publication de la demande: 31.10.2001
(73) Titulaire: SAGEM COMMUNICATIONS SAS, 92848 Rueil Malmaison Cedex (FR)
(72) Inventeur: Frederic, Alain, 95610 Eragny sur Oise (FR)
(74) Mandataire: Bloch, Gérard

(56) Documents cités:
- EP-A- 0 823 789
- EP-A- 0 852 448
- EP-A- 0 896 493
- EP-A- 0 941 002
- US-A- 6 002 948

## Description

L'invention concerne les transmissions radio de données entre des terminaux, à portée radio les uns des autres, qui s'effectuent dans des canaux (slots) de trames temporelles et à des fréquences porteuses particulières. Les éléments radio temporels et fréquentiels varient d'un mode de transmission à un autre. Il existe un certain nombre de ces modes de transmission à courte portée radio.

A 1,9 GHz, se trouve le mode européen DECT data, c'est-à-dire le mode DPRS. A 2,4 GHz, on trouve une pluralité de modes dont
- le mode américain DECT data, c'est-à-dire le mode WDCT,
- le mode Bluetooth, pour éviter les fils sur de courtes distances, jusqu'à 10 m, voire 100 m,
- le mode IEEE 802,11, pour les réseaux LAN sans fil,
- le mode HOME RF, pour les réseaux locaux sans fil.
   Les applications auxquelles il est fait ici allusion sont multiples et variées, des applications industrielles aux applications domestiques, sans oublier les applications bureautiques et médicales par exemple pour relier un ordinateur et une imprimante.
   La communication de deux terminaux à portée radio l'un de l'autre, dans un même mode de transmission, implique, au préalable,
- une étape d'appariement,
- un état de veille,
- une phase d'établissement de la communication.

Une fois la communication établie, celle-ci est définie par les paramètres suivants :
- la fréquence porteuse,
- la durée de la trame,
- le nombre, ou la durée des canaux dans la trame,
- le mot de synchronisation.

On a vu plus haut que les transmissions pouvaient s'effectuer selon une pluralité de modes. Et bien, la demanderesse a songé à proposer des terminaux compatibles avec tous ces modes, c'est-à-dire des terminaux multimodes, et qui, de surcroît, s'adaptent automatiquement au mode d'un correspondant, c'est-à-dire des terminaux automodes.

On connaît par ailleurs par EP-A-0 823 789 (LSI LOGIC CORP) du 11 Février 1998 (1998-02-11), un appareil de communication sans-fil multifréquence agencé pour s'adapter à plusieurs fréquences et protocoles de communication.

A cet effet, l'invention concerne tout d'abord un procédé de communication selon la revendication 1.

Si la communication est requise par le premier terminal, le deuxième terminal étant ainsi prédéterminé, le premier terminal extrait le mode de transmission de sa table par simple association.

Si la communication est requise par le deuxième terminal, le premier terminal, mis en état de veille, extrait le mode de transmission et l'identité du deuxième terminal de sa table par balayage de celle-ci.

Dans ce cas, le premier terminal peut balayer un à un les différents paramètres des modes de transmission de sa table pour en déterminer le mode de transmission.

Dans ce cas encore, le premier terminal peut lever toute indétermination de l'identité du second terminal par l'écoute de son mot de synchronisation.

De préférence, le balayage d'un paramètre du mode de transmission du second terminal s'effectue par mesure de niveaux de réception, par mesure de la durée du cycle de fenêtres de réception d'énergie, pour la durée de trame, par mesure de la plus petite largeur des fenêtres de réception d'énergie, pour la durée des canaux dans la trame.

L'invention concerne également un terminal de communication selon la revendication 8.

L'invention sera mieux comprise à l'aide de la description suivante d'un mode préféré de mise en oeuvre du procédé de l'invention, en référence au dessin annexé, sur lequel :
- la figure 1 représente des équipements radio, base et terminaux, ayant divers modes de transmission, prévus pour la mise en oeuvre du procédé de l'invention,
- la figure 2 représente, par blocs fonctionnels, l'un des terminaux de la figure 1, et
- la figure 3 représente des trames temporelles de canaux de données et des fenêtres d'analyse de ces trames.

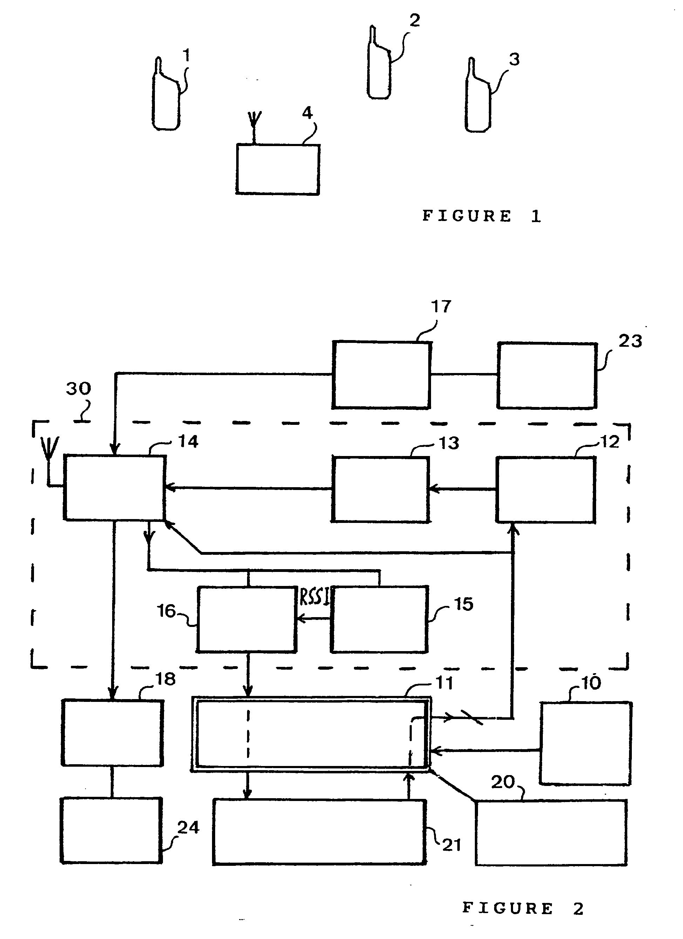

Sur la figure 1 sont représentés des équipements radio mutuellement à portée radio pour des liaisons locales, et précisément des terminaux mobiles référencés 1, 2, 3 et une base radio DECT 4 pour ceux-ci, reliée au réseau RTC par une ligne non représentée et constituant un équipement terminal de celui-ci. Fonctionnellement, la base 4 équivaut ici à un terminal 1 à 3 pour les échanges avec ceux-ci. Par la suite, la base 4 est donc appelée terminal.

Chacun des terminaux 1 à 4 peut fonctionner selon au moins un mode de transmission parmi une pluralité possible telle que celle citée au début : DECT data, Bluetooth, IEEE 802,11, HOME RF, à titre indicatif. Les éventails représentant chacun les divers des modes de transmission de l'un particulier des terminaux 1 à 4 peuvent être identiques ou différents. Une communication entre deux des terminaux 1 à 4 ne peut être établie que si les deux terminaux considérés utilisent un même mode, c'est-à-dire que chacun doit pouvoir connaître ou reconnaître le mode utilisé par un autre à un instant donné et doit disposer des ressources matérielles et logicielles pour traiter ce mode.

Les terminaux 1 à 4 peuvent être appariés entre eux par un utilisateur qui en commande deux (1, 2) à cet effet. Dans cette phase, chaque terminal 1, 2 émet selon l'un de ses modes de transmission et l'autre terminal 2, 1 mémorise, dans une table 21 (fig. 2), l'identité de l'autre terminal 1, 2 et un identifiant du mode de transmission de celui-ci. La table 21 constitue une bibliothèque, enrichie au cours du temps, de la liste des équipements correspondants 2 à 4 et des modes de transmission de chacun. Les spécifications des divers modes constituent ici une partie commune de la bibliothèque, adressée par les identifiants de modes.

Après appariement, le terminal 1 à 4 passe à l'état de veille. Ensuite peut intervenir la phase d'établissement de communication évoquée ci-dessus.

Pour la communication, il faut définir la spécification des divers paramètres d'un mode de transmission, spécifiant des caractéristiques physiques de transmission telles que fréquence porteuse, type et vitesse de modulation, et des caractéristiques permettant le synchronisation logique des terminaux 1 à 4 qui doivent communiquer, telles que la durée d'une trame de transmission, le nombre de voies ou canaux de la trame, un mot de synchronisation et/ou d'identification, et autres. Ces diverses spécifications constituent la partie commune ci-dessus de la bibliothèque de la table 21.

Pour établir une communication de transmission radio de données entre les terminaux 1 et 2, par exemple, après avoir enregistré dans le terminal 1 la table 21 de terminaux 2 à 4 avec lesquels le terminal 1 a déjà été apparié et a déjà communiqué, avec leurs modes de transmission associés et les deux terminaux 1 et 2 étant appariés, le terminal 1 analyse sa table 21 pour en extraire le mode de transmission du terminal 2 et se configurer dans ce mode, c'est-à-dire commander les circuits appropriés (fig. 2) de transmission radio et de traitement des signaux échangés.

La communication peut être requise par l'un ou l'autre des terminaux 1 et 2.

Si c'est le terminal 1 qui la requiert, le terminal appelé 2 étant donc prédéterminé, le terminal 1 extrait le mode de transmission de la table 21 par simple association entre le numéro d'appel, ou équivalent, identifiant le terminal 2 et le ou les modes de transmission de celui-ci dans la table 21, compatibles avec au moins un mode de transmission du terminal 1.

Si, au contraire, c'est le terminal 2 qui requiert la communication, le terminal 1, qui avait été mis en veille, extrait le mode de transmission et l'identité du terminal 2 de sa table 21 par balayage de celle-ci. En pareil cas, le terminal 1 peut par exemple balayer un à un les différents paramètres des modes de transmission de sa table 21, pour en déterminer le mode de transmission du terminal 2. Le terminal 1 compare alors les paramètres de transmission, qu'il détermine à partir des signaux reçus, à ceux de la table 21, constituant une signature électronique de chaque autre terminal 2 à 4.

En outre, si une indétermination subsiste quant à l'identité du terminal appelant 2, puisque le terminal 3, 4 pourrait avoir lui aussi (dans une table 20 de modes locaux) le mode de transmission utilisé par le terminal 2, le terminal 1 écoute le mot de synchronisation-identification émis par le terminal 2. Ce mot est reçu sans difficulté puisque le terminal 1 a déjà déterminé les paramètres du mode utilisé et que la synchronisation physique entre terminaux 1, 2 est déjà acquise.

Pour le balayage d'un paramètre du mode de transmission du terminal 2, il s'agit par exemple de déterminer avec précision le rythme de répétition de trains de signaux, représentant la période de la trame, de déterminer la durée de chaque train, représentant la durée d'un canal de la trame, ou encore de mesurer l'énergie des signaux reçus et d'en suivre l'évolution.

La figure 2 représente fonctionnellement les circuits du terminal 1 pour effectuer les opérations voulues, les terminaux 2 à 4 ayant la même structure que celui-ci, pour ce qui concerne les échanges de données.

Le terminal 1 comporte une horloge ou base de temps 10 rythmant le fonctionnement d'une unité centrale 11, ici un microcontrôleur, gérant l'ensemble des circuits du terminal 1. La table ou mémoire 20 contient des données représentant les modes de transmission que peut traiter le terminal 1, et la table 21, contenant des modes des autres terminaux 2 à 4 est dans une autre mémoire ou zone de mémoire.

Les circuits radio proprement dits, représentés dans le cadre en pointillés 30, comprennent un étage modulateur/démodulateur 14 comportant des amplificateurs d'émission/réception radio, commandé en émission par un générateur de fréquence porteuse 13 lui-même commandé par un circuit 12 de réglage et de saut de fréquence. En sortie réception, l'étape 14 est relié à un circuit 15 de mesure de l'énergie radio instantanée reçue, fournissant un signal correspondant RSSI (Indicateur de niveau du Signal Reçu) à un circuit 16 générateur de fenêtre de réception d'énergie recevant la sortie de l'étage 14. L'étage 14 fournit aussi, après démodulation, les signaux radio reçus, ici des paquets de données, à un bloc de dépaquetage 18 qui mémorise les données utiles dans une mémoire de réception 24.

En sens opposé, un bloc 17, de mise en paquets de données, relie une mémoire 23, d'émission de données utiles, à l'entrée de données à moduler de l'étage 14.

Comme l'illustre très schématiquement la figure 2, la table 21 est balayée à travers le microcontrôleur 11 (ligne en pointillés), par les circuits 15 et 16 qui ont analysé les signaux radio reçus, afin de trouver, dans la table 21, une correspondance entre ceux-ci et un mode qui y est mémorisé. En pareil cas, cette correspondance provoque la commande, par le microcontrôleur 11 (ligne en pointillés) des circuits 13 et 14 pour respectivement régler des valeurs et des rythmes de saut de fréquence et régler la modulation/démodulation de l'étage 14, selon le mode de transmission du terminal 2 reconnu dans la table 21. Le microcontrôleur 11 consulte préalablement la table 20 des modes locaux pour vérifier que les deux circuits 13, 14, et des circuits non représentés de traitement des données, sont aptes à fonctionner selon ce mode.

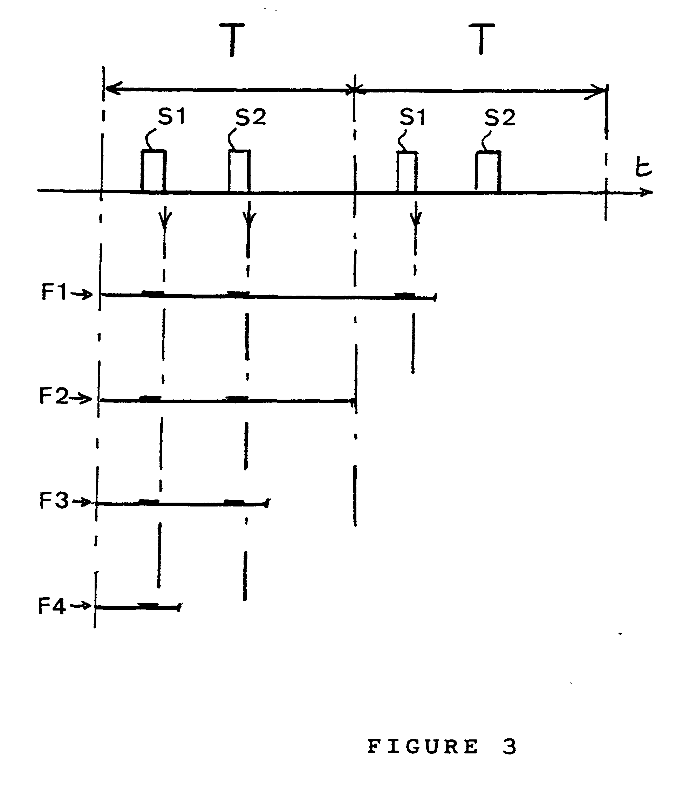

La figure 3 représente, en fonction du temps t, deux trames T reçues, comportant ici deux canaux actifs. Le circuit 15 détecte avec intégration les signaux reçus dans les canaux, d'enveloppe S1, S2, et fournit ainsi le signal de niveau RSSI, indiquant les positions temporelles relatives des signaux S1, S2, qui se répètent, et le niveau instantané de leur enveloppe (énergie). Le balayage d'un paramètre du mode de transmission du terminal 2 s'effectue par mesure de niveaux de réception (enveloppe RSSI) et par mesure de la durée du cycle de fenêtres de réception d'énergie, pour la durée de la trame T. Pour déterminer la durée des canaux de la trame T, on mesure la plus petite largeur des fenêtres de réception d'énergie.

A cet effet, le circuit 16, générateur de fenêtres temporelles, détermine a priori une première fenêtre F1, recouvrant ici la totalité de la première trame T et le signal S1 de la deuxième, et mesure le niveau ou taux moyen d'occupation temporelle, c'est-à-dire ici la durée ou énergie totale des signaux S1 et S2 de la première trame et S1 de la deuxième. Des deuxième, troisième et quatrième fenêtres F2, F3 et F4 commencent au même instant que la fenêtre F1 mais ont des durées respectives qui vont en diminuant. Précisément ici, la fenêtre F2 correspond sensiblement à la durée de trame T, la fenêtre F3 correspond elle aussi avec les signaux S1 et S2 et la fenêtre F4 ne correspond qu'au seul signal S1.

Le circuit générateur 16 détecte ainsi, par comparaison (différence) des taux d'occupation temporelle des fenêtres F1 et F2, ou de leur moyenne rapportée à la durée de la fenêtre considérée, la présence du signal S1 de la deuxième trame T. La durée ou position de ce signal S1 peut en outre être ainsi estimée. La même comparaison pour les fenêtres F2 et F3 indique l'absence de signal dans la partie de fin de fenêtre F2 qui ne se retrouve pas dans la fenêtre F3.

La comparaison entre les fenêtres F3 et F4 permet la détection du signal S2. La fenêtre F4 détecte le seul signal S 1 dont la durée, ou énergie, est égale à la différence de durées d'occupation, ou d'énergies, entre les fenêtres F1 et F2 déterminée ci-dessus.

D'une façon générale, on réduit une fenêtre (F1), de façon discrète ou continue, pour y déterminer avec précision la position d'un canal actif.

Le circuit générateur 16 détermine ici approximativement la durée ou position du signal S1 d'après la fenêtre F4 et la période de récurrence dans la trame qui le transporte, par comparaison entre la position de la fenêtre F4 et celle du tronçon final de la fenêtre F1 qui déborde de la fenêtre F3 et contient un même signal S1. La période de trame T étant ainsi déterminée, le contenu des signaux S1 et S2 peut alors être exploité pour, par exemple, reconnaître le mot de code identifiant l'appelant et déterminer aussi la position de début de trame.

Dans ce qui précède, l'exploitation de toute l'information de niveau d'énergie RSSI, et non de la seule durée d'activation de canal (S1, S2), présente l'avantage, par intégration d'énergie ou par comparaison à un seuil bas, d'éliminer l'influence des émetteurs parasites.

## Revendications

1. Procédé de communication entre un premier terminal (1) et un deuxième terminal (2) à portée radio l'un de l'autre pour transmission radio de données, procédé **caractérisé par le fait que** :
- après avoir enregistré dans le premier terminal (1) une table (21) de terminaux (2-4) avec lesquels le premier terminal (1) a déjà été apparié et a déjà communiqué, avec leurs modes de transmission associés et les deux terminaux (1, 2) étant appariés,
- le premier terminal (1) analyse sa table (21) pour en extraire le mode de transmission du deuxième terminal (2) et se configurer dans ce mode.

2. Procédé selon la revendication 1, dans lequel, si la communication est requise par le premier terminal (1), le deuxième terminal (2) étant ainsi prédéterminé, le premier terminal (1) extrait le mode de transmission de sa table (21) par simple association.

3. Procédé selon la revendication 1, dans lequel si la communication est requise par le deuxième terminal (2), le premier terminal (1), mis en état de veille, extrait le mode de transmission et l'identité du deuxième terminal (2) de sa table (21) par balayage de celle-ci.

4. Procédé selon la revendication 3, dans lequel le premier terminal (1) balaye un à un les différents paramètres des modes de transmission de sa table (21) pour en déterminer le mode de transmission.

5. Procédé selon l'une des revendications 3 et 4, dans lequel le premier terminal (1) lève toute indétermination de l'identité du deuxième terminal (2) par l'écoute de son mot de synchronisation.

6. Procédé selon l'une des revendications 4 et 5, dans lequel le balayage d'un paramètre du mode de transmission du deuxième terminal (2) s'effectue par mesure de niveaux de réception, et par mesure de la durée du cycle de fenêtres de réception d'énergie, pour la durée de trame (T).

7. Procédé selon la revendication 6, dans lequel on mesure la plus petite largeur des fenêtres de réception d'énergie, pour la durée des canaux dans la trame (T).

8. Terminal de communication pour transmission radio de données, adapté pour la mise en oeuvre du procédé de la revendication 1, comprenant
- un bloc de modulation (14),
- un indicateur de niveau de réception (15),
- une horloge (10),
- un microcontrôleur (11),
**caractérisé par le fait qu'**il comprend en outre :
- un bloc de saut de fréquence (12, 13),
- un générateur de fenêtre de réception d'énergie (16) et
- un bloc de mise en paquets des données (17).

## Claims

1. Communication method between a first terminal (1) and a second terminal (2) within radio broadcasting range of one another, for the radio transmission of data, wherein the method is **characterised in that:**
- after storing in the first terminal (1) a table (21) of terminals (2-4) with which the first terminal (1) has already been paired and has communicated, with their associated transmission modes and the two terminals (1, 2) being paired,
- the first terminal (1) analyses its table (21) in order to extract the transmission mode of the second terminal (2) and configure itself to that mode.

2. Method according to claim 1, wherein if the communication is required by the first terminal (1), as the second terminal (2) is thus predetermined, the first terminal (1) extracts the transmission mode from its table (21) by simple association.

3. Method according to claim 1, wherein if the communication is required by the second terminal (2), the first terminal (1), placed on stand-by, extracts the transmission mode and the identity of the second terminal (2) from its table (21) by scanning it.

4. Method according to claim 3, wherein the first terminal (1) scans one by one the various parameters of the transmission modes of its table (21) to determine the transmission mode thereof.

5. Method according to any of claims 3 and 4, wherein the first terminal (1) clears any doubt as to the identity of the second terminal (2) by listening to its timing word.

6. Method according to any of claims 4 and 5, wherein the scanning of a transmission mode parameter of the second terminal (2) is carried out by measuring the reception level, and by measuring the cycle duration of the energy reception windows, for the duration of the frame (T).

7. Method according to claim 6, wherein the shortest width of the energy reception windows is measured for the duration of the channels in the frame (T).

8. Communication terminal for the radio transmission of data adapted to the implementation of the method according to claim 1, comprising:
- a modulation unit (14),
- a reception level gauge (15),
- a clock (10),
- a micro-controller (11),
**characterised in that** it further comprises:
- a frequency jump unit (12, 13),
- an energy reception window generator (16), and
- a unit for creating data packets (17).

## Patentansprüche

1. Verfahren zur Kommunikation zwischen einem ersten Endgerät (1) und einem zweiten Endgerät (2) in Funkreichweite zueinander zur Funkübertragung von Daten, wobei das Verfahren **dadurch gekennzeichnet ist, dass**:
- nachdem in dem ersten Endgerät (1) eine Tabelle (21) mit Endgeräten (2 bis 4), mit denen das erste Endgerät (1) bereits gepaart wurde und bereits kommuniziert hat, zusammen mit den damit verbundenen Übertragungsmodi gespeichert wurde, und nachdem die beiden Endgeräte (1, 2) gepaart wurden,
- das erste Endgerät (1) seine Tabelle (21) analysiert, um daraus den Übertragungsmodus des zweiten Endgeräts (2) zu entnehmen und sich in diesem Modus zu konfigurieren.

2. Verfahren nach Anspruch 1, wobei, wenn die Kommunikation von dem ersten Endgerät (1) angefordert wird, so dass das zweite Endgerät (2) somit vorherbestimmt ist, das erste Endgerät (1) den Übertragungsmodus aus seiner Tabelle (21) durch einfache Verknüpfung entnimmt.

3. Verfahren nach Anspruch 1, wobei, wenn die Kommunikation von dem zweiten Endgerät (2) angefordert wird, das erste Endgerät (1), das in den Standby-Modus versetzt wurde, den Übertragungsmodus und die Identität des zweiten Endgeräts (2) aus seiner Tabelle (21) durch Abfragen derselben entnimmt.

4. Verfahren nach Anspruch 3, wobei das erste Endgerät (1) die verschiedenen Parameter der Übertragungsmodi aus seiner Tabelle (21) einzeln abfragt, um daraus den Übertragungsmodus zu bestimmen.

5. Verfahren nach einem der Ansprüche 3 und 4, wobei das erste Endgerät (1) jegliche Unbestimmtheit der Identität des zweiten Endgeräts (2) durch Abhören seines Synchronisationswortes aufhebt.

6. Verfahren nach einem der Ansprüche 4 und 5, wobei das Abfragen eines Parameters des Übertragungsmodus des zweiten Endgeräts (2) durch das Messen von Empfangspegeln und durch das Messen der Dauer des Zyklus der Energieempfangsfenster während der Rahmendauer (T) erfolgt.

7. Verfahren nach Anspruch 6, wobei die kleinste Breite der Energieempfangsfenster während der Dauer der Kanäle in dem Rahmen (T) gemessen wird.

8. Kommunikationsendgerät zur Funkübertragung von Daten, das zum Umsetzen des Verfahrens nach Anspruch 1 geeignet ist und folgendes umfasst:
- einen Modulationsblock (14),
- eine Empfangspegelanzeige (15),
- einen Taktgeber (10),
- einen Mikrocontroller (11),
**dadurch gekennzeichnet, dass** es ferner folgendes umfasst:
- einen Frequenzsprungblock (12, 13),
- einen Generator (16) für Energieempfangsfenster und
- einen Block (17) zum Paketieren von Daten.
